# EUROPEAN PATENT APPLICATION

(11) **EP 4 832 203 A1**
(43) Date of publication of application: **28.10.2026**
(21) Application number: 24923228.1
(22) Date of filing: 31.07.2024
(51) Int. Cl.: H01M 50/258, H01M 50/242, H01M 50/204, H01M 50/244, H01M 10/615, H01M 10/657

(54) **BATTERY PACK, ENERGY STORAGE SYSTEM AND ELECTRIC DEVICE**

(30) Priority: 08.02.2024 CN 202420290049 U
(71) Applicant: Contemporary Amperex Technology Co., Limited, Ningde, Fujian 352100 (CN)
(72) Inventor: LI, Xingxing, Ningde, Fujian 352100 (CN); HUANG, Xiaoteng, Ningde, Fujian 352100 (CN)
(74) Representative: Lorenz Seidler Gossel Part. mbB
(86) International application number: PCT/CN2024/109046
(87) International publication number: WO 2025/167013

(57) **Abstract**

A battery pack, an energy storage system and an electric device. In the battery pack, a heating assembly (20) is provided between two adjacent columns of battery cells (10), a heating portion (202) and a buffer portion (201) are stacked in a first direction, the heating portion (202) is adapted to heat the battery cells (10) and the buffer portion (201), and the buffer portion (201) is adapted to shrink under pressure and expand under heat so as to flexibly deform, and the heating assembly (20) fits with the battery cells (10).

## Description

### CROSS-REFERENCE TO RELATED APPLICATION

The present application claims priority to Chinese Patent Application No. 202420290049.4, filed by Contemporary Amperex Technology Co., Limited (CATL) on February 8, 2024 and entitled "BATTERY PACK, ENERGY STORAGE SYSTEM AND ELECTRIC DEVICE".

### TECHNICAL FIELD

The present application relates to the technical field of battery packs, and in particular, to a battery pack, an energy storage system, and an electric device.

### BACKGROUND

The operating temperature of the battery cell in the battery pack needs to be controlled at an appropriate temperature. High temperatures pose a risk of thermal runaway, and low temperatures cause the capacity loss of the battery pack (i.e., reduced endurance in daily use).

In the related art, the battery cell is cooled by a liquid cooling plate, and the battery cell is heated by providing structures such as a heating film and a heating patch. The heating film and the heating patch are attached to the battery cell to transfer heat. However, the expansion and contraction of the battery cell during charging and discharging may cause the battery cell to not be closely attached to the heating film and the heating patch, resulting in dry burning, which not only reduces the reliability of the battery pack, but also leads to poor heating performance.

### SUMMARY

The present application aims to solve at least one of the technical problems existing in the prior art. Therefore, an objective of the present application is to provide a battery pack, an energy storage system, and an electric device. The battery pack features a better heating effect and higher use reliability.

Provided is a battery pack, including: battery cells and a heating assembly. A plurality of battery cells are provided, and the plurality of battery cells are arranged in columns in a first direction and arranged in rows in a second direction, the first direction being orthogonal to the second direction. The heating assembly is disposed between two adjacent columns of the battery cells, the heating assembly includes a heating portion and a buffer portion extending in the second direction, the heating portion and the buffer portion are stacked in the first direction, the heating portion is suitable for heating the battery cells and the buffer portion, and the buffer portion is suitable for contraction under pressure and expansion under heat to deform flexibly, such that the heating assembly is attached to the battery cells.

Therefore, the heating assembly includes the heating portion and the buffer portion, the buffer portion and the battery cell can be heated by the heating portion, and the buffer portion can undergo flexible deformation, which can not only enable a better attachment effect between the battery cell and the heating assembly, so as to reduce the probability of dry burning of the heating assembly, improve the safety and reliability of the battery pack, and reduce potential safety hazards, but also keep the area of the heat conduction interface between the heating assembly and the battery cell stable when the battery cell is deformed, thereby further improving the heating effect and heating efficiency of the heating assembly.

According to some embodiments of the present application, the heating assembly includes: a substrate and flexible films located on both sides of the substrate, where the flexible films are in sealing connection with the substrate, a buffer heat-conducting medium is filled between the substrate and the flexible films, the buffer heat-conducting medium and the flexible films define the buffer portion, and a heating member is embedded in the substrate to define the heating portion.

According to some embodiments of the present application, the buffer heat-conducting medium is configured as an insulating coolant liquid.

According to some embodiments of the present application, the heating portion is configured as a positive temperature coefficient thermistor.

According to some embodiments of the present application, the heating assembly includes a buffer layer and heating films located on both sides of the buffer layer, the buffer layer defining the buffer portion, and the heating films defining the heating portion.

According to some embodiments of the present application, the buffer layer is configured as a foam layer.

According to some embodiments of the present application, the buffer layer includes: a first sub-buffer layer and second sub-buffer layers located on both sides of the first sub-buffer layer, the first sub-buffer layer and the second sub-buffer layer being made of different materials.

According to some embodiments of the present application, the first sub-buffer layer is configured as an airbag layer.

According to some embodiments of the present application, the second sub-buffer layer is configured as a foam layer.

According to some embodiments of the present application, the airbag layer is provided with a plurality of airbags, and the airbag is filled with a thermal expansion medium. According to some embodiments of the present application, a dimension of the heating assembly in the first direction is 0.5 mm to 20 mm.

According to some embodiments of the present application, end plates are further disposed at both ends of each column of the battery cells in the second direction, and end parts of the buffer portion in the second direction are connected to the end plates by fasteners.

According to some embodiments of the present application, the heating assembly further includes: a connecting plate, the connecting plate extending in the first direction, and end parts of adjacent buffer portions in the first direction being connected by the connecting plate.

Provided is an energy storage system, including: the battery pack according to the above embodiments.

Provided is an electric device, including: the battery pack according to the above embodiments.

The additional aspects and the advantages of the present application will be partially provided in the following description, will partially become apparent from the following description, or will be learned through the practice of the present application.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic diagram of an electric device according to an embodiment of the present application;
FIG. 2 is a schematic diagram of a battery according to an embodiment of the present application;
FIG. 3 is a schematic exploded diagram of a case according to an embodiment of the present application;
FIG. 4 is a schematic exploded diagram of a support plate according to an embodiment of the present application;
FIG. 5 is a schematic structural diagram of a plate body according to a first embodiment of the present application;
FIG. 6 is another schematic structural diagram of a plate body according to the first embodiment of the present application;
FIG. 7 is a schematic structural diagram of a plate body according to a second embodiment of the present application;
FIG. 8 is a partial schematic diagram of cooperation between a support plate and a frame according to an embodiment of the present application;
FIG. 9 is another partial schematic diagram of cooperation between a support plate and a frame according to an embodiment of the present application;
FIG. 10 is a partially enlarged schematic diagram of a plate body according to an embodiment of the present application;
FIG. 11 is a cross-sectional view of a reinforcement plate according to an embodiment of the present application;
FIG. 12 is another cross-sectional view of a reinforcement plate according to an embodiment of the present application; and
FIG. 13 is yet another cross-sectional view of a reinforcement plate according to an embodiment of the present application.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the present application and simplifying the description, and are not intended to indicate or imply that the apparatuses or elements referred to must have a specific orientation or be constructed and operated in the specific orientation. Therefore, these terms should not be construed as limitations on the present application.

In the description of the present application, the recitation of a first feature "on" or "under" a second feature may include the recitation of the first and second features being in direct contact, and may also include the recitation that the first and second features are not in direct contact, but are in contact via another feature between them.

In the description of the present application, the first feature being "on", "above", and "over" the second feature includes the first feature being directly above and obliquely above the second feature, or simply indicates that the horizontal height of the first feature is higher than that of the second feature.

The term "plurality of" used in the present application refers to no less than two (including two).

In the embodiments of the present application, a heating assembly 20 may be applied to heat a battery cell 10. In some severe cold use environments, such as a use scenario in the northern winter, the ambient temperature is low, which may cause the activation energy of the electrolyte inside the battery cell 10 to be reduced, and the efficiency of the battery cell 10 to be reduced. However, by providing the heating assembly 20, the temperature of the battery cell 10 may be adjusted by the heating assembly 20, and the battery cell 10 may be heated, so as to improve the efficiency of the battery cell 10 in a low temperature environment, reduce the energy storage capacity loss of the battery cell 10 in a cold environment, and improve the use experience.

The battery cell 10 may be a secondary battery, which refers to a battery cell 10 that can continue to be used by activating the active material through charging after the battery cell 10 is discharged.

The battery cell 10 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery pack 100 mentioned in the embodiments of the present application refers to a single physical module including one or a plurality of battery cells 10 to provide higher voltage and capacity. When a plurality of battery cells 10 are provided, the plurality of battery cells 10 are connected in series, in parallel, or in series-parallel by a busbar component.

In some embodiments, a plurality of battery cells 10 may form into a battery module 600; that is, when a plurality of battery cells 10 are provided, the plurality of battery cells 10 are disposed and fixed to form one battery module 600.

In some embodiments, the battery pack 100 includes a case 500 and a battery cell 10. At least one battery cell 10 or at least one battery module 600 is accommodated in the case 500, the case 500 is provided with an accommodating space, and the at least one battery cell 10 or the at least one battery module 600 is accommodated in the accommodating space.

In some embodiments, the case 500 may be a part of the chassis structure of the vehicle. For example, a part of the case 500 may become at least a part of the floor of the vehicle, or a part of the case 500 may become at least a part of the crossbeam and the longitudinal beam of the vehicle.

In some embodiments, the battery pack 100 or the battery module 600 may be a part of an energy storage system. The energy storage system may be an energy storage container, an energy storage electrical cabinet, or the like, and a battery and an energy shutdown module are integrated into the energy storage system.

Battery technology advancement requires consideration of various design factors at the same time, such as energy density, cycle life, discharge capacity, charging and discharging rate, and other performance parameters. In addition, the safety performance of the battery also needs to be considered.

Since the energy required by people has strong time and space properties, to reasonably use the energy and improve the utilization rate of the energy, it is necessary to store one form of energy in the same form or by converting it into another form of energy through a medium or device, and then release it in a specific energy form based on the future application requirements. As is well known, to achieve the major goal of carbon neutrality, green energy is mainly used to replace fossil energy at present, so as to achieve the purpose of generating green electric energy.

The current green energy mainly includes light energy, wind energy, water potential, and the like. Light energy and wind energy generally have the problems of strong intermittency and large fluctuation, which may cause the voltage of the green power grid to be unstable (the power is not enough during periods of high power demand, and the power is too much during periods of low power demand). Since the unstable voltage may cause damage to the power, the problem of "discarding the wind and light" may arise due to insufficient power demand or insufficient acceptance capacity of the power grid.

To solve the problem of insufficient power demand or insufficient acceptance capacity of the power grid, it is necessary to rely on an energy storage system and the like. That is, the energy storage system converts electric energy into energy in another form through physical or chemical means for storage, and converts the energy stored in the energy storage system into electric energy for release when needed. In short, the energy storage system is similar to a large "power bank", and stores electric energy when light energy and wind energy are sufficient and discharges the stored electric energy when needed.

Currently, energy storage embraces a relatively wide application scenario, and includes energy storage on the power generation side, energy storage on the power grid side, grid-connected energy storage for renewable energy, energy storage on the user side, and the like. Corresponding types of energy storage systems include:
(1) Large-scale energy storage containers applied to an energy storage scenario on the power grid side. Such systems can be used as a high-quality active and reactive power regulation power supply in a power grid to achieve load matching of electric energy in terms of time and space and enhance the capacity for consuming renewable energy, and are of great significance in providing backup for the power grid system and alleviating the pressure on power supply during peak load, and in peak shaving and frequency regulation.
(2) Small- and medium-scale energy storage electrical cabinets applied to an industrial and commercial energy storage scenario (such as banks or shopping malls) on the user side and small household energy storage cases applied to a home energy storage scenario on the user side. Such systems have a main operation mode of "peak shaving and valley filling". There is a relatively large price difference in electricity charges at peak and valley locations based on electricity demand. Therefore, after users have energy storage devices, to reduce costs, they usually charge the energy storage cabinets/cases during the low electricity price period. During the high electricity price period, the electricity in the energy storage device is discharged for use to save on electricity charges. In addition, in remote areas and areas with a high incidence of natural disasters such as earthquakes and hurricanes, the existence of a household energy storage system is equivalent to that a user provides a standby power supply for the user and the power grid, thereby avoiding inconvenience caused by frequent power failure due to disasters or other reasons.

Based on the foregoing case in which energy is stored in a physical or electrochemical manner, with the electrochemical energy storage being an example, the energy storage system may include at least one battery described above, in which a chemical element is used as an energy storage medium, so as to achieve charging and discharging through a chemical reaction or change of the energy storage medium. In short, electric energy generated by light energy and wind energy is stored in the at least one battery through a chemical reaction or change of the energy storage medium. When the demand for external electric energy reaches a peak, electricity stored in the at least one battery is discharged for use through a chemical reaction or change of the energy storage medium, or is transferred to a place with insufficient electricity for use.

The battery cell 10 serves as the minimum energy unit of the battery module 600, the battery pack 100, and the energy storage system. The battery module 600 or the battery pack 100 includes a plurality of battery cells 10. The battery cell 10 includes a battery large surface defined by the width edge and the length edge of the battery cell 10, a battery small surface defined by the width edge and the height edge, and a battery end surface defined by the length edge and the width edge. To enable the use of the battery cell 10 in a cold environment, a heating film may be attached to the surface (such as the battery large surface, the battery small surface, or the battery end surface) of the battery cell 10.

The heating film is attached to the surface of the battery cell 10, and the battery cell 10 expands and contracts during the charging and discharging process, which may cause the heating film to be out of contact with the battery cell 10, resulting in the risk of dry burning and tearing of the heating film, posing potential safety hazards, and reducing the heating effect and heating efficiency.

The embodiments of the present application provide a battery pack 100. A heating assembly 20 in the battery pack 100 can undergo adaptive deformation based on the expansion and contraction of a battery cell 10 in the battery pack 100, such that the heating assembly 20 and the battery cell 10 are more attached, which can not only improve the heating effect and heating efficiency, but also reduce the risk of dry burning and reduce potential safety hazards.

The technical solutions described in the embodiments of the present application are applicable to the battery pack 100 and an electric device 200 using the battery pack 100.

The electric device 200 may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric device 200 described above is not specially limited in the embodiments of the present application.

For ease of explanation, the following embodiments will be described by taking a vehicle as an example of the electric device 200.

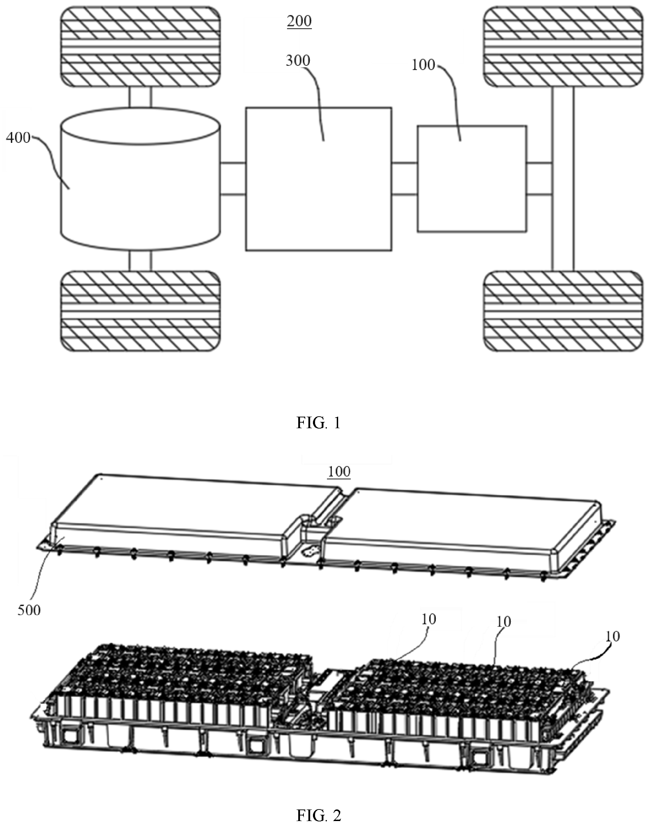

Referring to FIG. 1, it is a schematic structural diagram of a vehicle according to some embodiments of the present application. A battery pack 100 is disposed inside the vehicle, and the battery pack 100 may be disposed at the bottom, head, or rear of the vehicle. The battery pack 100 may be configured to supply power to the vehicle. For example, the battery pack 100 may serve as an operation power source for the vehicle.

The vehicle may further include a controller 300 and a motor 400. The controller 300 is configured to control the battery pack 100 to power the motor 400, and the motor 400 is formed as a load, e.g., for operation power needed by the vehicle for start-up, navigation, and driving.

In some embodiments of the present application, the battery pack 100 may not only serve as an operation power source for the vehicle, but also as a driving power source for the vehicle to, replacing or partially replacing fuel or natural gas, provide driving power for the vehicle.

Referring to FIG. 2, FIG. 2 is an exploded view of a battery pack 100 according to some embodiments of the present application. The battery pack 100 includes a battery module 600 and a case 500. The case 500 is configured to accommodate the battery module 600.

The case 500 is a component for accommodating the battery module 600, the case 500 provides a placement space for a plurality of battery cells 10 in the battery module 600, and the case 500 may be of various structures. In some embodiments, the case 500 may include a tray and a case 500. The tray and the case 500 are lidded with each other to define a placement space for accommodating the battery cells 10. The tray and the case 500 may be in various shapes, such as rectangular parallelepiped and cylindrical. The tray may be of a hollow structure with one side open, the case 500 may also be of a hollow structure with one side open, and the open side of the tray is lidded with the open side of the case 500 to form the case 500 with a placement space. The situation may also be that the tray is of a hollow structure with one side open, the case 500 is of a plate-like structure, and the open side of the tray is lidded with the case 500 to form the case 500 with a placement space. As an example, the battery cell 10 may be a cylindrical battery cell 10, a prismatic battery cell 10, a pouch battery cell 10, or a battery cell 10 of other shapes, which is not particularly limited in the present application.

In the battery pack 100, one or a plurality of battery cells 10 may be provided. If a plurality of battery cells 10 are provided, the plurality of battery cells 10 may be connected in series, in parallel, or in series-parallel. The series-parallel connection means that both series connection and parallel connection are present in the connection of the plurality of battery cells 10. A plurality of battery cells 10 may be first connected in series, in parallel, or in series-parallel to form the battery module 600, and a plurality of battery modules 600 may then be connected in series, in parallel, or in series-parallel to form a whole to be accommodated in the case 500. Alternatively, all the battery cells 10 may be directly connected in series, in parallel, or in series-parallel, and then the whole formed by all the battery cells 10 is accommodated in the case 500.

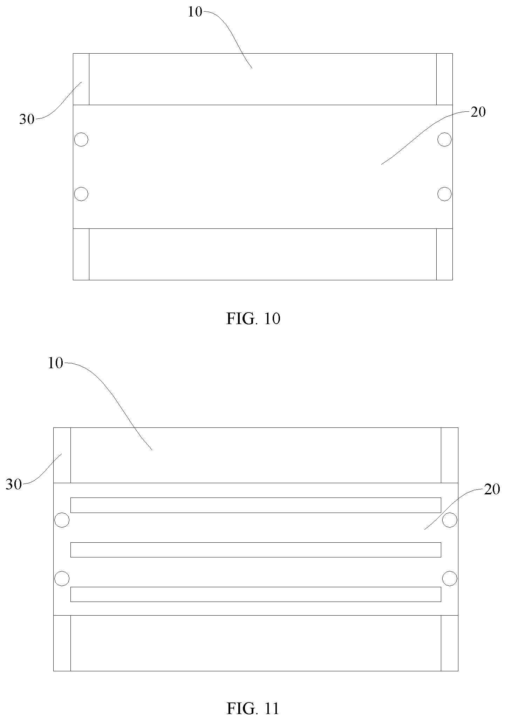

The battery pack 100, the energy storage system, and the electric device 200 according to the embodiments of the present application are described below with reference to FIGs. 1 to 13.

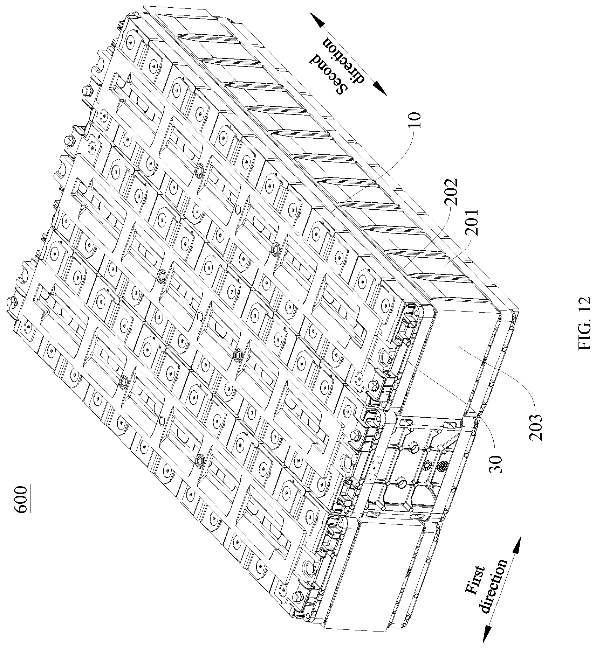

As shown in FIGs. 2 and 12, the present application provides a battery pack 100, including: battery cells 10 and a heating assembly 20. The heating assembly 20 may be disposed between adjacent battery cells 10, such as between the battery large surfaces of adjacent battery cells 10, between the battery small surfaces of adjacent battery cells 10, and between the battery end surfaces of adjacent battery cells 10, so as to heat the battery cells 10 through the heating assembly 20, increase the operating temperature of the battery cell 10, increase the activation energy of the electrolyte inside the battery cell 10, mitigate reduction in the endurance of the battery cell 10, and improve the energy storage capacity loss of the battery cell 10.

A plurality of battery cells 10 are provided in the battery pack 100, and the plurality of battery cells 10 may be arranged in an array, or the plurality of battery cells 10 may form at least one battery module 600. One battery module 600 is provided with a plurality of cells arranged in an array or in a single row, and the cells are connected in series, in parallel, or in series-parallel to output electric energy based on a required voltage.

A plurality of battery cells 10 are provided, and the plurality of battery cells 10 are arranged in columns in a first direction and arranged in rows in a second direction, the first direction being orthogonal to the second direction.

Illustratively, in the first direction, the battery large surfaces may be disposed oppositely among a plurality of battery cells 10 in the same column, and in the second direction, the battery small surfaces may be disposed oppositely among the battery cells 10 in the same row. The first direction may be a length direction, and the second direction may be a width direction. Certainly, the battery small surfaces may be disposed oppositely in the first direction, and the battery large surfaces may be disposed oppositely in the second direction, which is not specifically limited in the present application.

The heating assembly 20 is disposed between two adjacent columns of battery cells 10. The heating assembly 20 includes a heating portion 202 and a buffer portion 201 extending in the second direction, the heating portion 202 and the buffer portion 201 are stacked in the first direction, the heating portion 202 is suitable for heating the battery cells 10 and the buffer portion 201, and the buffer portion 201 is suitable for contraction under pressure and expansion under heat to deform flexibly, such that the heating assembly 20 is attached to the battery cells 10.

The heating portion 202 and the buffer portion 201 of the heating assembly 20 extend in the second direction, are located between two adjacent columns of battery cells 10 in the first direction, and are suitable for heating the two columns of battery cells 10 on the battery large surfaces or the battery small surfaces of the two columns of battery cells 10.

The heating portion 202 and the buffer portion 201 being stacked in the first direction may be that one heating portion 202 and one buffer portion 201 are provided, and the heating portion and the butter portion are stacked in the first direction; or a plurality of heating portions 202 and a plurality of buffer portions 201 are provided, and the plurality of heating portions 202 and the plurality of buffer portions 201 are stacked in the first direction. For example, the heating assembly 20 includes one heating portion 202 and two buffer portions 201, and the heating portion 202 is located between the buffer portions 201; or the heating assembly 20 includes two buffer portions 201 and one heating portion 202, and the buffer portions 201 are located on both sides of the heating portion 202.

The buffer portion 201 may be made of a flexible material or use a flexible film 22a to wrap a liquid substance or a gaseous substance to achieve flexible deformation, and the heating portion 202 may be configured as an electric heating structural member such as a resistor. The flexible deformation of the buffer portion 201 may include shape recovery under the action of elastic potential energy, shape recovery under the action of gravitational potential energy, and the like. Therefore, when the battery cell 10 is deformed, for example, when the battery cell 10 expands or contracts, the surface of the battery cell 10 opposite to the heating assembly 20 may be bulged, and at least a part of the buffer portion 201 may contract under pressure to attach to the bulged part, and other parts of the buffer portion 201 may be attached to the non-bulged part; or the battery cell 10 is spaced apart from at least a part of the heating assembly 20, and as the temperature of the heating portion 202 increases, at least a part of the buffer portion 201 may expand under heat and fill the gap between the battery cell 10 and the heating assembly 20, such that the attachment effect between the battery cell 10 and the heating assembly 20 is better, the area of the heat conduction interface between the battery cell 10 and the heating assembly 20 may be larger, the area of the heat conduction interface may remain stable, and thus the heating efficiency and heating effect are both better.

According to the battery pack 100 of the embodiments of the present application, the heating assembly 20 includes the heating portion 202 and the buffer portion 201, the buffer portion 201 and the battery cell 10 can be heated by the heating portion 202, and the buffer portion 201 can undergo flexible deformation, which can not only enable a better attachment effect between the battery cell 10 and the heating assembly 20, so as to reduce the probability of dry burning of the heating assembly 20, improve the safety and reliability of the battery pack 100, and reduce potential safety hazards, but also keep the area of the heat conduction interface between the heating assembly 20 and the battery cell 10 stable when the battery cell 10 is deformed, thereby further improving the heating effect and heating efficiency of the heating assembly 20.

The flexible deformation of the buffer portion 201 according to the embodiments of the present application at least requires contraction under pressure and expansion under heat, and correspondingly, may be achieved by cooperation between contraction under pressure and elastic potential energy recovery, cooperation between contraction under pressure and gravitational potential energy recovery, and cooperation between contraction under pressure and expansion under heat, or in various combinations of contraction under pressure, gravitational potential energy recovery, and expansion under heat. Several feasible embodiments of the embodiments of the present application will be specifically described below with three specific embodiments. It should be understood that the exemplary description of the present application is only for the convenience of those skilled in the art to understand the technical solutions of the present application, and is not exhaustive.

### First embodiment:

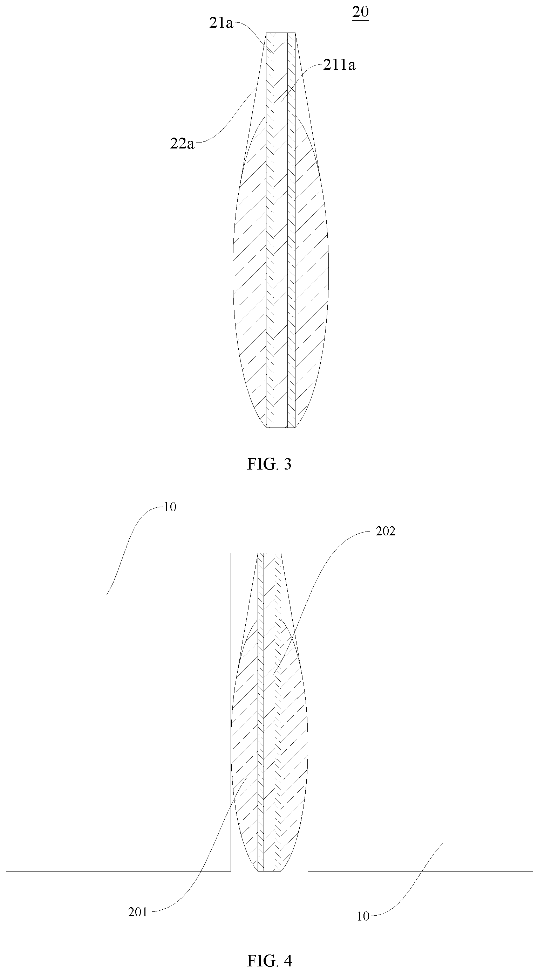

As shown in FIGs. 3 and 4, in the first embodiment, the heating assembly 20 includes: a substrate 21a and flexible films 22a located on both sides of the substrate 21a. The flexible films 22a are in sealing connection with the substrate 21a, a buffer heat-conducting medium is filled between the substrate 21a and the flexible films 22a, the buffer heat-conducting medium and the flexible films 22a define the buffer portion 201, and a heating member 211a is embedded in the substrate 21a to define the heating portion 202.

The peripheral edge of the flexible film 22a is in sealing connection with the substrate 21a, thereby defining a flexible space on at least one side surface of the flexible film 22a and the substrate 21a in the first direction. The flexible space can be filled with the buffer heat-conducting medium. The flexible film 22a is flexible and can deform after being pressed, and the buffer heat-conducting medium is a liquid medium, such as a coolant liquid. With the deformation of the flexible film 22a, the buffer heat-conducting medium can flow to adapt to the deformation of the battery cell 10. After the battery cell 10 deforms, the flexible film 22a deforms, such that the flexible film 22a is attached to the battery cell 10 all the time. A part of the heat exchange surface of the battery cell 10 and the heating portion 202 can achieve indirect heat exchange through the gas in the flexible film 22a, and the other part of the heat exchange surface of the battery cell and the heating portion 202 can achieve indirect heat exchange through the buffer heat-conducting medium. After the flexible film 22a deforms, the liquid surface of the corresponding buffer heat-conducting medium gradually rises, the area of the indirect heat exchange part of the gas gradually decreases, and the heat exchange effect and heat exchange efficiency gradually rise. After the heating is completed or stopped, the buffer heat-conducting medium can restore the initial state under the action of gravity.

In the continuous heating process of the buffer heat-conducting medium by the heating portion 202, the proportion of the vaporized buffer heat-conducting medium gradually increases, and the proportion of the liquid buffer heat-conducting medium gradually decreases, such that the flexible film 22a expands, which can further absorb the gap between the flexible film 22a and the battery cell 10, and can also increase the area of the heat conduction interface between the heating assembly 20 and the battery cell 10, thereby improving the heat exchange effect and heat exchange efficiency.

In the first embodiment, flexible deformation is achieved through cooperation between the flexible film 22a and the liquid buffer heat-conducting medium, and the initial state is restored through the change in gravitational potential energy. During the flexible deformation process, the liquid level (liquid surface height) of the liquid buffer heat-conducting medium changes, which can increase the area of the heat conduction interface and preliminarily improve the heating effect and heating efficiency. With increase in the heating time and the temperature of the operation environment, the proportion of the vaporized buffer heat-conducting medium gradually increases, and the proportion of the liquid buffer heat-conducting medium gradually decreases, such that the flexible film 22a expands, which can further fill the gap between the flexible film 22a and the battery cell 10, further increase the area of the heat conduction interface, and improve the attachment effect of the heat conduction interface, thereby correspondingly further improving the heating effect and heating efficiency.

The flexible film 22a may be any one of a polyethylene terephthalate (PET) film, a polyimide ((PI) film, a polypropylene (PP) film, a polycarbonate (PC) film, and a polyvinyl chloride (PVC) film.

To facilitate the assembly of the flexible film 22a structure between the battery cells 10, during initial assembly, a double-sided adhesive tape structure may be provided between the flexible film 22a and the substrate 21a and between the flexible film 22a and the battery cells 10, and may be removed after the assembly is completed.

According to some embodiments of the present application, the buffer heat-conducting medium is configured as an insulating coolant liquid.

With the insulating coolant liquid as the buffer heat-conducting medium, when the buffer heat-conducting medium in the heating assembly 20 leaks, it will not cause a short circuit in surrounding components, which can further improve the use safety and reliability of the battery pack 100 and reduce potential safety hazards. Meanwhile, the buffer heat-conducting medium also has a certain heat absorption capacity in non-cold environments, and therefore, can also achieve the auxiliary heat dissipation of the battery cells 10 in some use scenarios.

According to some embodiments of the present application, the heating portion 202 is configured as a positive temperature coefficient thermistor.

The heating portion 202 may be embedded in the substrate 21a or wound around the substrate 21a. The higher the temperature of the heating portion 202 is, the greater the resistance of the heating portion is. When the temperature is too high, the resistance of the heating portion 202 rises to a large value. In this case, the heating portion 202 is equivalent to an open circuit, which can achieve overheating protection, so as to achieve the overheating protection function and improve the use safety and reliability of the heating assembly 20.

### Second embodiment:

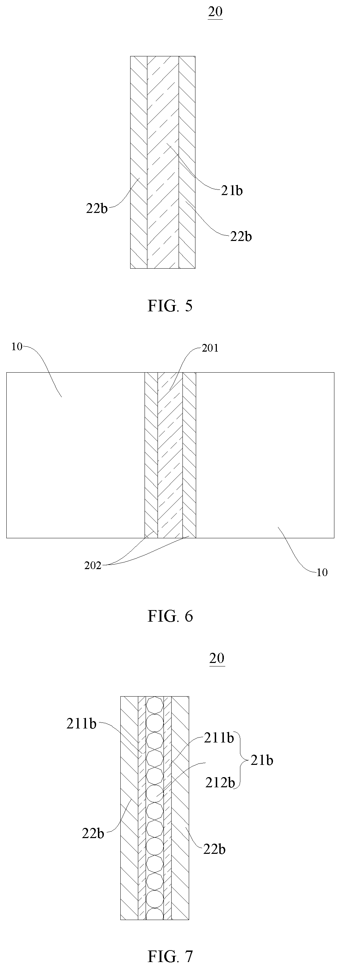

As shown in FIGs. 5 and 6, in the second embodiment, the heating assembly 20 includes a buffer layer 21b and heating films 22b located on both sides of the buffer layer 21b. The buffer layer 21b defines the buffer portion 201, and the heating films 22b define the heating portion 202.

The buffer layer 21b and the heating films 22b form a sandwich structure. In the first direction, the heating film 22b, the buffer layer 21b, and the heating film 22b are stacked. In the first direction, the two heating films 22b are suitable for being attached to two adjacent battery cells 10 in the first direction, and the two battery cells 10 are heated through the two heating films 22b, respectively. The buffer layer 21b is located between the two heating films 22b. When the battery cell 10 expands, the buffer layer 21b may contract under pressure, such that the heating film 22b can adapt to the deformation of the battery cell 10, the probability of cracking of the heating film 22b after being subject to the force is reduced, and the heating film 22b is enabled to still remain attached to the battery cell 10. After the heating is stopped, the buffer layer 21b can restore the initial state under the action of elastic potential energy, such that the area of the heat conduction interface between the battery cell 10 and the heating film 22b remains stable, and the heating efficiency and heating effect are improved.

According to some embodiments of the present application, the buffer layer 21b is configured as a foam layer.

The foam layer can expand under heat. When the heating film 22b is dry-burned, the foam expands under heat to push the heating film 22b to be attached to the battery cell 10, which mitigates dry burning, improves the heating effect and heating efficiency, reduces potential safety hazards, and improves the reliability.

### Third embodiment:

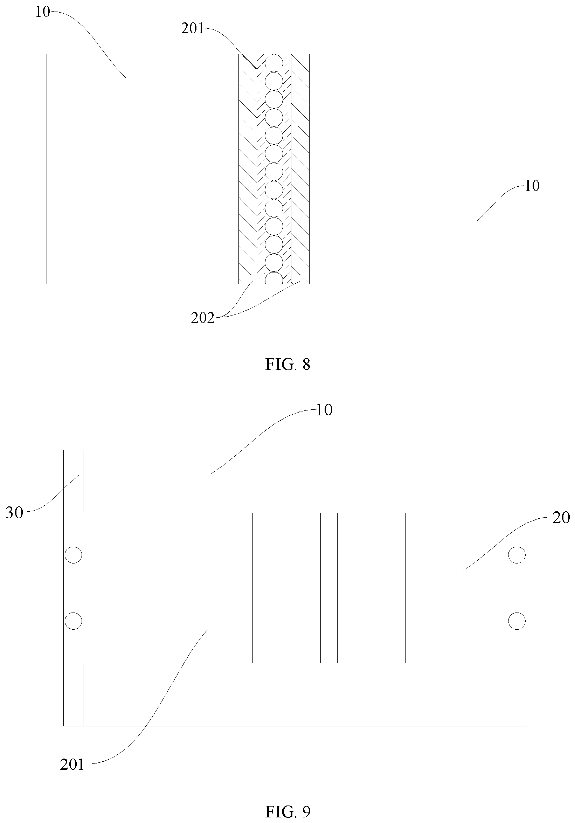

As shown in FIGs. 7 and 8, according to some embodiments of the present application, the buffer layer 21b includes: a first sub-buffer layer 211b and second sub-buffer layers 212b located on both sides of the first sub-buffer layer 211b. The first sub-buffer layer 211b and the second sub-buffer layer 212b are made of different materials.

In the third embodiment, on the basis of the second embodiment, the buffer layer 21b is differentiated into a sandwich structure, and heating films 22b are further provided on both sides of the buffer layer 21b. The buffer layer 21b includes the first sub-buffer layer 211b and the second sub-buffer layers 212b located on both sides of the first sub-buffer layer 211b. The first sub-buffer layer 211b and the second sub-buffer layer 212b are made of different materials, such that one of the first sub-buffer layer and the second sub-buffer layer is formed as an expandable structure under heat, while the other is formed as a deformable structure under pressure. Alternatively, both layers can expand under heat and deform under pressure, but have different deformation and expansion coefficients.

The same technical effects as those of the first embodiment and the second embodiment can also be achieved, which will not be repeated here.

Illustratively, the first sub-buffer layer 211b is configured as an airbag layer; the second sub-buffer layer 212b is configured as a foam layer.

The heating film 22b may be located between adjacent battery cells 10 and in an interference compression assembly. When the battery cell 10 deforms, the foam and the airbag can be squeezed, and the airbag deforms, such that the heating film 22b is stably attached to the battery cell 10. When the heating film 22b is dry-burned, the gas inside the airbag can expand under heat to push the heating film 22b to move towards the battery cells 10, thereby improving the heating effect and heating efficiency.

According to some embodiments of the present application, the airbag layer is provided with a plurality of airbags, and the airbag is filled with a thermal expansion medium.

The thermal expansion medium may be an inert gas, so as to drive the airbag to expand through the thermal expansion medium, absorb the gap between the heating film 22b and the battery cell 10, and reduce the probability of dry burning of the heating film 22b.

As shown in FIGs. 9, 10, and 11, according to some embodiments of the present application, the dimension of the heating assembly 20 in the first direction is 0.5 mm to 20 mm.

Illustratively, the dimension of the heating assembly 20 in the first direction may be 0.5 mm, 1 mm, 2 mm, 3 mm, 4 mm, 5 mm, 6 mm, 7 mm, 8 mm, 9 mm, 10 mm, 15 mm, 20 mm, or the like, such that the thickness of the heating assembly 20 is more reasonable, and the expansion absorption capacity, heating capacity, and attachment capacity of the heating assembly 20 (the ability to enable the heating assembly 20 to be more attached to the battery cell 10) are considered.

As shown in FIGs. 9, 10, and 11, according to some embodiments of the present application, end plates 30 are further disposed at both ends of each column of battery cells 10 in the second direction, and end parts of the buffer portion 201 in the second direction are connected to the end plates 30 by fasteners.

The fasteners may be rivets, screws, bolts, or the like, and the heating assembly 20 and the battery cells 10 are fixed by the fasteners, which can improve the fixation stability and reliability between the heating assembly 20 and the battery cells 10. In addition, the double-sided adhesive tape is not required, such that the heating assembly 20 is less affected by aging in connection stability and has higher stability.

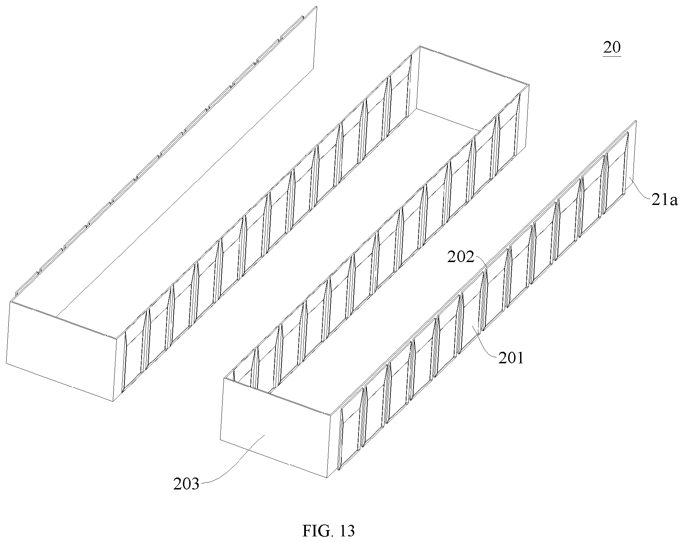

As shown in FIGs. 12 and 13, according to some embodiments of the present application, the heating assembly 20 further includes a connecting plate 203. The connecting plate 203 extends in the first direction, and end parts of adjacent buffer portions 201 in the first direction are connected by the connecting plate 203.

The heating assembly 20 may include a plurality of heating units, each heating unit is disposed between two columns of battery cells 10, and the plurality of heating units may be connected by the connecting plate 203, such that the heating assembly 20 may be arranged in a serpentine shape.

When a plurality of columns of battery cells 10 are provided in the battery pack 100 or the battery module 600, a column of heating units are disposed between adjacent columns of battery cells 10, and a plurality of columns of heating units are all connected to the connecting plate 203, which can reduce the difficulty of arranging the heating assembly 20 and improve the convenience of arranging the heating assembly 20. In addition, the connecting plate 203 may also be fixed to the end plate 30, further improving the fixation stability and reliability of the heating assembly 20.

The present application provides an energy storage system, including the battery pack 100 according to the above embodiments.

As shown in FIGs. 1 and 3, the present application provides an electric device 200, including the battery pack 100 according to the above embodiments.

According to the battery pack 100 of the embodiments of the present application, the heating assembly 20 may be disposed between adjacent columns of battery cells 10, and the buffer portion 201 is suitable for buffering and absorbing the expansion of the battery cells 10 or reducing the gap between the battery cells 10 and the heating assembly 20 through expansion, such that the area of the heat conduction interface can remain stable or increase to improve the heating efficiency and heating effect.

The heating assembly 20 according to the embodiments of the present application may be configured as a structure that restores its initial state under gravitational potential energy in cooperation with the thermal expansion of a liquid medium, or may restore its initial assembly under elastic potential energy in cooperation with an expandable structure under heat, thereby achieving the above technical effects.

As shown in FIGs. 9, 10, 11, and 13, in the first embodiment, a plurality of heating portions 202 and buffer portions 201 of the heating assembly 20 may be provided and divided into a plurality of heating units. Each heating unit is located between two adjacent columns of battery cells 10, and a plurality of heating portions 202 and buffer portions 201 in each heating unit may be spaced apart and connected by a plate body (such as a substrate) connected to the connecting plate 203, such that the entire heating assembly 20 is in the shape of a strip. In the second embodiment, the buffer portion 201 is defined by the foam layer extending in the second direction, the foam layer serves as a support structure for the heating portion 202, the heating portion 202 is configured as a heating film and is supported by the foam layer, the foam layer may be provided with rigid structures at both ends and connected to the end plates by the rigid structures, and the rigid structures at both ends of the foam layer are connected to the connecting plate 203, such that the entire heating assembly 20 may be in the shape of a strip. In the third embodiment, the buffer portion 201 is defined by the foam layer extending in the second direction and the airbag layer located on the inner side of the foam layer, the foam layer serves as a support structure for the heating portion 202, the airbag layer supports the airbag layer on the inner side of the foam layer, the heating portion 202 is configured as a heating film and is supported by the foam layer, the foam layer may be provided with rigid structures at both ends and connected to the end plates by the rigid structures, and the rigid structures at both ends of the foam layer are connected to the connecting plate 203, such that the entire heating assembly 20 may be in the shape of a strip; a plurality of airbags may be provided in the airbag layer, and the plurality of airbags are configured as strip-shaped airbags and extend in the second direction, or are configured as a plurality of spherical airbags and disposed sequentially in the second direction.

Other configurations and operations of the battery pack 100, the energy storage system, and the electric device 200 according to the embodiments of the present application are known to those of ordinary skill in the art and will not be repeated here.

In the description of this specification, the description of reference terms "one embodiment", "some embodiments", "a schematic embodiment", "an example", "a specific example", "some examples", or the like means that a specific feature, structure, material, or characteristic described in connection with the embodiments or examples is included in at least one embodiment or example of the present application. The specific feature, structure, material, or characteristic described may be combined in a suitable manner in any one or more embodiments or examples.

Although the embodiments of the present application have been illustrated and described, it will be appreciated by those of ordinary skill in the art that various changes, modifications, replacements, and variations can be made to these embodiments without departing from the principle and purpose of the present application, and the scope of the present application is defined by the claims and equivalents thereof.

## Claims

1. A battery pack, comprising:
battery cells (10), wherein a plurality of battery cells (10) are provided, and the plurality of battery cells (10) are arranged in columns in a first direction and arranged in rows in a second direction, the first direction being orthogonal to the second direction; and
a heating assembly (20), wherein the heating assembly (20) is disposed between two adjacent columns of the battery cells (10), the heating assembly (20) comprises a heating portion (202) and a buffer portion (201) extending in the second direction, the heating portion (202) and the buffer portion (201) are stacked in the first direction, the heating portion (202) is suitable for heating the battery cells (10) and the buffer portion (201), and the buffer portion (201) is suitable for contraction under pressure and expansion under heat to deform flexibly, such that the heating assembly (20) is attached to the battery cells (10).

2. The battery pack according to claim 1, wherein the heating assembly (20) comprises: a substrate (21a) and flexible films (22a) located on both sides of the substrate (21a), wherein the flexible films (22a) are in sealing connection with the substrate (21a), a buffer heat-conducting medium is filled between the substrate (21a) and the flexible films (22a), the buffer heat-conducting medium and the flexible films (22a) define the buffer portion (201), and a heating member (211a) is embedded in the substrate (21a) to define the heating portion (202).

3. The battery pack according to claim 2, wherein the buffer heat-conducting medium is configured as an insulating coolant liquid.

4. The battery pack according to claim 2, wherein the heating portion (202) is configured as a positive temperature coefficient thermistor.

5. The battery pack according to claim 1, wherein the heating assembly (20) comprises a buffer layer (21b) and heating films (22b) located on both sides of the buffer layer (21b), the buffer layer (21b) defining the buffer portion (201), and the heating films (22b) defining the heating portion (202).

6. The battery pack according to claim 5, wherein the buffer layer (21b) is configured as a foam layer.

7. The battery pack according to claim 5, wherein the buffer layer (21b) comprises: a first sub-buffer layer (211b) and second sub-buffer layers (212b) located on both sides of the first sub-buffer layer (211b), the first sub-buffer layer (211b) and the second sub-buffer layer (212b) being made of different materials.

8. The battery pack according to claim 7, wherein the first sub-buffer layer (211b) is configured as an airbag layer.

9. The battery pack according to claim 7, wherein the second sub-buffer layer (212b) is configured as a foam layer.

10. The battery pack according to claim 8, wherein the airbag layer is provided with a plurality of airbags, and the airbag is filled with a thermal expansion medium.

11. The battery pack according to any one of claims 1 to 10, wherein a dimension of the heating assembly (20) in the first direction is 0.5 mm to 20 mm.

12. The battery pack according to any one of claims 1 to 10, wherein end plates (30) are further disposed at both ends of each column of the battery cells (10) in the second direction, and end parts of the buffer portion (201) in the second direction are connected to the end plates (30) by fasteners.

13. The battery pack according to claim 12, wherein the heating assembly (20) further comprises: a connecting plate (203), the connecting plate (203) extending in the first direction, and end parts of adjacent buffer portions (201) in the first direction being connected by the connecting plate (203).

14. An energy storage system, comprising the battery pack according to any one of claims 1 to 13.

15. An electric device (200), comprising the battery pack according to any one of claims 1 to 13.
